# EUROPEAN PATENT APPLICATION

(11) **EP 4 549 797 A1**
(43) Date of publication of application: **07.05.2025**
(21) Application number: 23383122.1
(22) Date of filing: 03.11.2023
(51) Int. Cl.: F16L 37/34, F16L 37/36

(54) **CONNECTOR FOR QUICK ASSEMBLY OF HYDRAULIC SYSTEMS**

(71) Applicant: J.Juan S.A., 08850 Gavà , Barcelona (ES)
(72) Inventor: García Blanco, Joaquín, 08850 Gavà, Barcelona (ES); García Torras, Simón, 08850 Gavà, Barcelona (ES)
(74) Representative: Clarke, Modet y Cía., S.L.

(57) **Abstract**

A connector for quick assembly of hydraulic systems, comprising a male connection element, a female connection element, and anchoring means (4) configured to anchor the male connection element to the female connection element in a connected position (C). The connection elements further comprising closing and opening means (22, 32) configured to allow a fluid to flow in the connected position (C), and to seal the connection elements in a disconnected position of the connector (1). The anchoring means (4) comprise a threaded nut (41) located on the male connection element, wherein said threaded nut (41) is freely rotatable around an axial direction (X) for being coupled to a thread (38) disposed on the female connection element to securely anchor the male connection element to the female connection element in the connected position (C).

## Description

### Field of the invention

The present invention relates to a connector for quick assembly of hydraulic systems for fluid conduction of liquid or gaseous fluids), specially designed for braking, cooling, clutch or damping systems in vehicles (bikes, cars, motorcycles, etc.), among other systems in general.

### Background of the invention

Connectors for quick assembly of hydraulic systems, specially involving hydraulic connection fittings, such as male and female connections elements, to be used for bike or automotive hydraulic systems, enable the different elements making up the system to be assembled without having to subsequently fill the hydraulic circuit. In other words, they integrate the working fluid under appropriate conditions for operation thereof. This prevents, once the system has been assembled, having to apply a complex purge and fill process, the purpose of which is to empty out the circuit in order to take the air out of it and subsequently fill it with hydraulic fluid. This process raises costs and slows down the method for assembling said hydraulic systems.

For this purpose, system elements, supplied separately, are therefore used, into which the hydraulic fluid is incorporated prior to the assembly thereof, under appropriate conditions that enable the operation of the same. These elements require quick-assembly connectors, which must ensure that the elements are separately leak-tight prior to being connected, and enable them to be in hydraulic communication once said connection has been made. Likewise, during this connection or transition phase, the possible leakage of hydraulic fluid held inside the same must be avoided, and air must be prevented from entering the hydraulic circuit. At the same time, they should offer a simple, quick and efficient way of connecting.

The elements which normally make up said hydraulic systems are usually present in the actuation (brake pumps), in the stability and safety controls (compensators, anti-lock systems for wheels or ABS, electronic stability systems or ESP, etc.), in the braking devices (brake calipers), and in the hydraulic distribution and intercommunication thereof (brake hoses, tubes pipes, etc.).

There are various known solutions based on the use of connectors equipped with mechanical valves having resilient springs, and further comprising anchoring or fastening means for securely coupling the male and female connection elements forming part of these connectors.

For instance, documents EP1308663A2 and EP1862719A1 disclose hydraulic connection fittings wherein the anchoring means of the male and female connection elements are made through bayonet systems.

Document WO2022/137160A1 discloses a different anchoring system. In particular, it describes a way to connect controls of the braking systems to brakes of the braking system using a snap-fit connection without introducing air into the brake fluid line.

The existing hydraulic connection fittings that are used for generally automotive hydraulic systems, especially for bled hydraulic braking systems of motorbikes, do not assure a simple and, at the same time, safe anchoring between the male and the female connection elements of the fitting. In fact, the systems used to anchor these types of fittings are structurally complex and made of a considerable number of components and, at the same time, quite easy to be opened in case of the occurrence of important external stresses or vibrations.

The present invention solves the problems set forth above by means of a connector for quick assembly of hydraulic systems, the configuration of which provides the following advantages:
- It provides a faster line assembly into the final hydraulic system, as it only requires screwing both male and female connector elements. At the same time, the connection keeps the system bled without leakage or air going inside the lines.
- It allows to be disconnect keeping the system bled without leakage or air going inside the lines.
- It is a cheaper solution because it has less components and a simpler design.
- Its performance is also better than current state of art as it holds higher pressures than standard ones because it is directly crimped on the hydraulic hose instead of screwed hydraulic unions which are more sensitive to leakage.
- It offers a more aesthetical connection as the hydraulic hose is directly inserted into the hydraulic connector and not with more adapters thanks to the sleeve design directly on the connectors that are crimped to the hydraulic hose. Current connections are less aesthetical as many components are visible, like the adapters to the hydraulic hose that make the connection look much bigger.

### Description of the invention

The connector for quick assembly of hydraulic systems of the present invention comprises a male connection element, a female connection element, and anchoring means.

The male connection element comprises a first passage, and first closing and opening means movable longitudinally along said first passage.

The female connection element comprises a second passage, and second closing and opening means movable longitudinally along said second passage, wherein the male connection element is designed to be inserted into the female connection element along an axial direction to connect both connection elements in a connected position of the connector.

The closing and opening means are configured to allow a fluid to flow through the passages in the connected position and to seal the connection elements in a disconnected position of the connector.

The male connection element and the female connection element correspond to connectable elements or subassembly fittings of a hydraulic system. For example, they may be elements of the actuation (brake pumps), of the stability and safety controls (compensators, anti-lock systems for wheels or ABS, electronic stability systems or *ESP,* etc.), of the braking devices (brake calipers), clutch devices (slave, clutch master cylinder), and/or of the hydraulic distribution and intercommunication thereof (brake hoses, tubes, pipes, etc.). The male connection element and the female connection element can be supplied separately. Each of them, duly filled and purged, i.e., holding the hydraulic fluid inside them and without air in the circuit. In this way, once they have been mounted and connected, they are ready to carry out their function.

The anchoring means are configured to anchor the male connection element to the female connection element in said connected position.

The connector is characterized in that the anchoring means comprise a threaded nut located on the male connection element, wherein said threaded nut is freely rotatable around the axial direction for being coupled to a thread disposed on the female connection element to securely anchor the male connection element to the female connection element in the connected position. The threaded nut is preferably made of metal, such as stainless steel, between other possible materials (such as high-performance plastics), dimensioned according to the features of the subassembly fittings and/or components of the hydraulic system, such as nuts of different metrics (M8, M10, M12, etc.).

Preferably, the anchoring means comprise a retention ring arranged on the male connection element to prevent the nut from getting disassembled of the male connection element in the disconnected position, while at the same time allowing the free rotation of the threaded nut.

Preferably, the first passage extends from a first peripheral end (of the male connection element to a first connection end of the same, wherein the first peripheral end comprises a first nipple configured to directly received a first hose. In other embodiments, especially when the male connection element is directly connected or assembled to another component of the hydraulic system, such us a brake pump, brake caliper or slave cylinder, there is no need of receiving a hose. In these cases, the first nipple is not necessary, and the male connection element may comprise an external thread to directly screw it to said component.

Preferably, the male connector element comprises a first spring disposed within the first passage, so that when it is compressed allows a fluid to flow through the first passage, and when it is decompressed pushes the first closing and opening means to seal the male connection element. The first spring is preferably made of stainless steel.

Preferably, the second passage extends from a second peripheral end of the female connection element to a second connection end of the same, wherein the second peripheral end comprises a second nipple configured to directly received a second hose. In other embodiments, especially when the female connection element is directly connected or assembled to another component of the hydraulic system, such us a brake pump, brake caliper, or slave cylinder, there is no need of receiving a hose. In these cases, the second nipple is not necessary, and the female connection element may comprise an external thread to directly screw it to said component.

Preferably, the female connection element comprises a second spring disposed within the second passage, so that when it is compressed allows a fluid to flow through the second passage, and when it is decompressed pushes the second closing and opening means to seal the female connection element. The second spring is preferably made of stainless steel.

Preferably, the first closing and opening means and the second closing and opening means are configured to push each other in the connected position to respectively compress the first spring and the second spring thus allowing a fluid to flow through both passages.

Preferably, the first spring and the second spring have an equal or substantially equal elastic force to open both closing and opening means proportionally.

Preferably, the male connection element comprises an insertion part, whereas the female connection element comprises a receiving part configured to receive the insertion part, having an inner circular groove; wherein the inner circular groove lodges an intermediate gasket. The intermediate gasket is arranged to avoid leakage when the male connection element is being inserted into the female connection end, and to ensure hermeticity once both connection elements are in the connected position.

Preferably, the intermediate gasket is arranged in a middle or intermediated position between the first closing and opening means and the second closing and opening means in the connected position.

Preferably, the thread is externally disposed in the receiving part.

Preferably, the threaded nut embraces both the insertion part and the receiving part in the connected position.

The closing and opening means of the present invention may adopt different configurations.

According to a preferred embodiment, preferably, the first closing and opening means comprise a first valve from which extends a first rod integrally joined to said first valve. The first closing and opening means are preferably of "piston" type.

Preferably, the first closing and opening means comprise a first gasket configured to work in collaboration with a first valve seat disposed within the first passage to hermetically seal said first passage in the disconnected position, thus keeping the system bled. The first gasket is preferably made of a rubber O-ring.

Preferably, the second closing and opening means comprise a second valve from which extends a second rod integrally joined to said second valve. The second closing and opening means are preferably of "piston" type.

Preferably, the second closing and opening means comprise a second gasket configured to work in collaboration with a second valve seat disposed within the second passage to hermetically seal said second passage in the disconnected position, thus keeping the system bled. The second gasket is preferably made of a rubber O-ring.

Preferably, the first rod and the second rod are configured to push each other in the connected position to respectively compress the first spring and the second spring thus allowing a fluid to flow through both passages.

According to another preferred embodiment, preferably, the first closing and opening means comprise a movable body, movable longitudinally along the first passage, surrounded by a third gasket to hermetically seal said first passage in the disconnected position.

Preferably, the second closing and opening means comprise:
- a fixed body joined to the female connection element, facing the first body in the connected position; and
- a movable sleeve surrounding the fixed element, movable longitudinally along the second passage.

Preferably, the fixed body is surrounded by a fourth gasket to avoid leakage between the fixed body and the movable sleeve in the disconnected position.

### Brief description of the drawings

What follows is a very brief description of a series of drawings that aid in better understanding the invention, and which are expressly related to different embodiments of said invention that are presented by way of nonlimiting examples of the same.
Figure 1 represents a perspective view of the connector for quick assembly of hydraulic systems of the present invention in the disconnected position, according to a first preferred embodiment of the closing and opening means.
Figure 2 represents a longitudinal section of the connector of Figure 1.
Figure 3 represents a perspective view of the connector for quick assembly of hydraulic systems of Figure 1 in the connected position.
Figure 4 represents a longitudinal section of the connector of Figure 3.
Figure 5 represents a longitudinal section of the male connection element and the anchoring means in the disconnected position, according to a first preferred embodiment of the closing and opening means.
Figure 6 represents a longitudinal section of the female connection element in the disconnected position, according to a first preferred embodiment of the closing and opening means.
Figure 7 represents a longitudinal section of the connector for quick assembly of hydraulic systems of the present invention in the connected position, according to a first preferred embodiment of the closing and opening means.
Figure 8 represents a longitudinal section of the male connection element and the anchoring means in the disconnected position, according to a second preferred embodiment of the closing and opening means.
Figure 9 represents a longitudinal section of the female connection element in the disconnected position, according to a second preferred embodiment of the closing and opening means.
Figure 10 represents a longitudinal section of the connector for quick assembly of hydraulic systems of the present invention in the connected position, according to a second preferred embodiment of the closing and opening means.
Figure 11 represents a first example of application of the connector of the present invention, wherein it is used to connect two hydraulic hoses.
Figure 12 represents a second example of application of the connector of the present invention, wherein it is used to connect a hydraulic hose to a brake caliper, showing the connector in the disconnected position.
Figure 13 represents the second example of Figure 12, showing the connector in the connected position.

### Detailed description of the invention

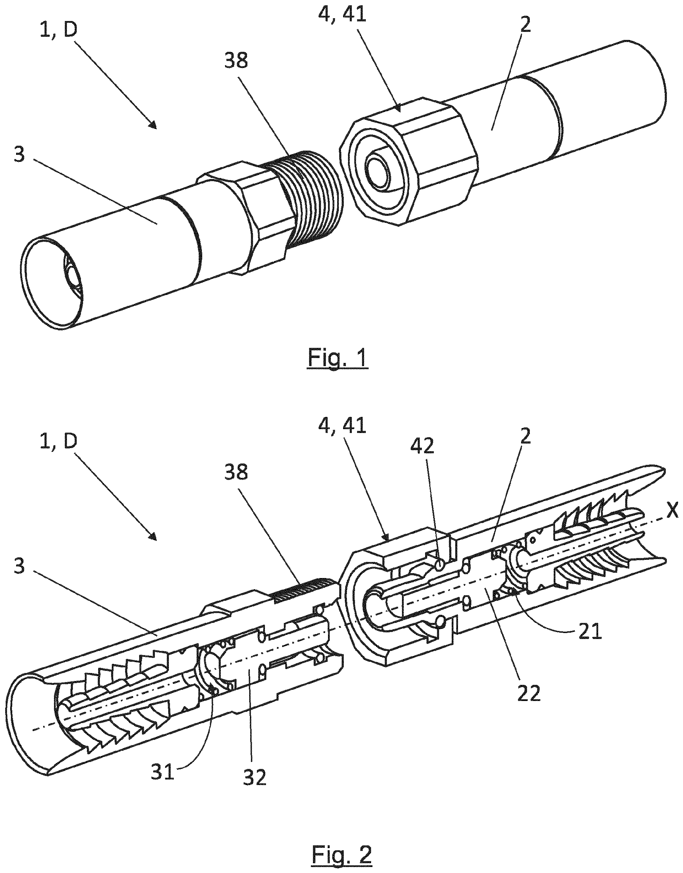

Figure 1 shows a perspective view of the connector (1) for quick assembly of hydraulic systems of the present invention in the disconnected position (D). The connector (1) comprises a male connection element (2), a female connection element (3) and anchoring means (4). Each connection element (2, 3) is hermetically sealed, thus keeping the system bled, and ready to carry out their function once connected.

Figure 2 represents a longitudinal section of the connector of Figure 1. As can be seen, the male connection element (2) comprises a first passage (21), and first closing and opening means (22) movable longitudinally along said first passage (21). In turn, the female connection element (3) comprises a second passage (31), and second closing and opening means (32) movable longitudinally along said second passage (31). The closing and opening means (22, 32) are configured to seal the connection elements (2, 3) in the disconnected position (D) of the connector (1).

The male connection element (2) is designed to be inserted into the female connection element (3) along an axial direction (X) to connect both connection elements (2, 3) in a connected position (C) of the connector (1).

The anchoring means (4) comprise a threaded nut (41) located on the male connection element (2), wherein said threaded nut (41) is freely rotatable around the axial direction (X) for being coupled to a thread (38) disposed on the female connection element (3) to securely anchor the male connection element (2) to the female connection element (3) in the connected position (C).

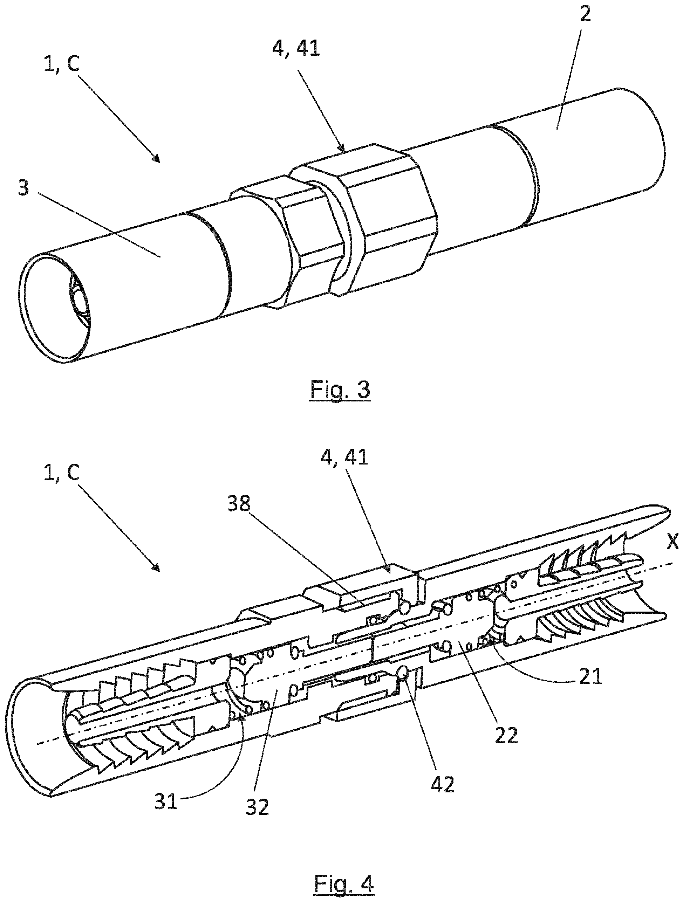

Figure 3 shows a perspective view of the connector (1) for quick assembly of hydraulic systems of the present invention in the connected position (C). The male connection element (2) and the female connection element (3) are anchored together thanks to the threaded nut (41).

Figure 4 shows a longitudinal section of the connector of Figure 3. As can be seen, the closing and opening means (22, 32) are configured to allow a fluid to flow through the passages (21, 31) in the connected position (C).

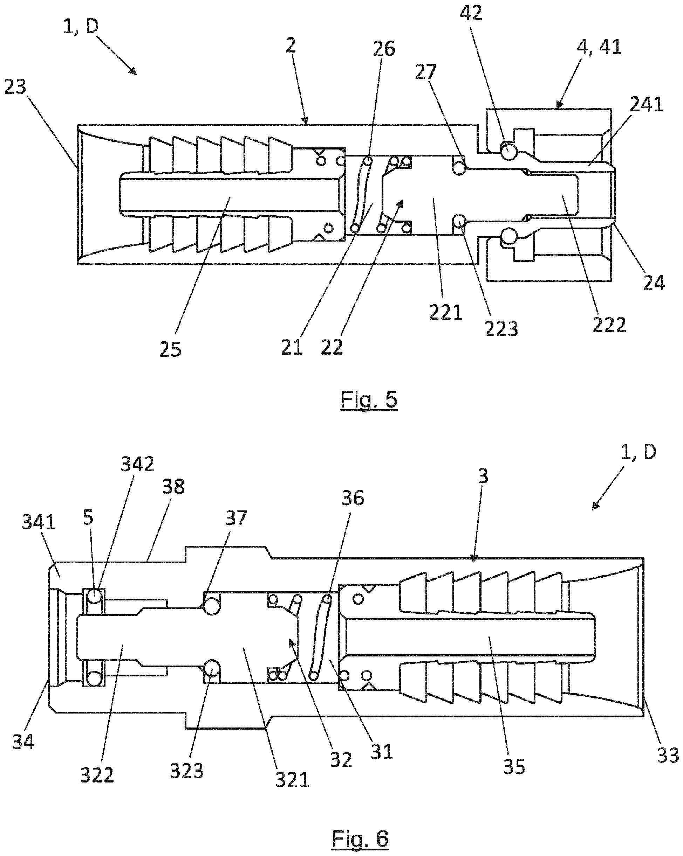

Figure 5 represents a longitudinal section of the male connection element (2) and the anchoring means (4) in the disconnected position (D). As can be seen, the anchoring means (4) comprise a retention ring (42) arranged on the male connection element (2) to prevent the nut (41) from getting disassembled of the male connection element (2) in the disconnected position (D), while at the same time allowing the free rotation of the threaded nut (41) around the axial direction (X).

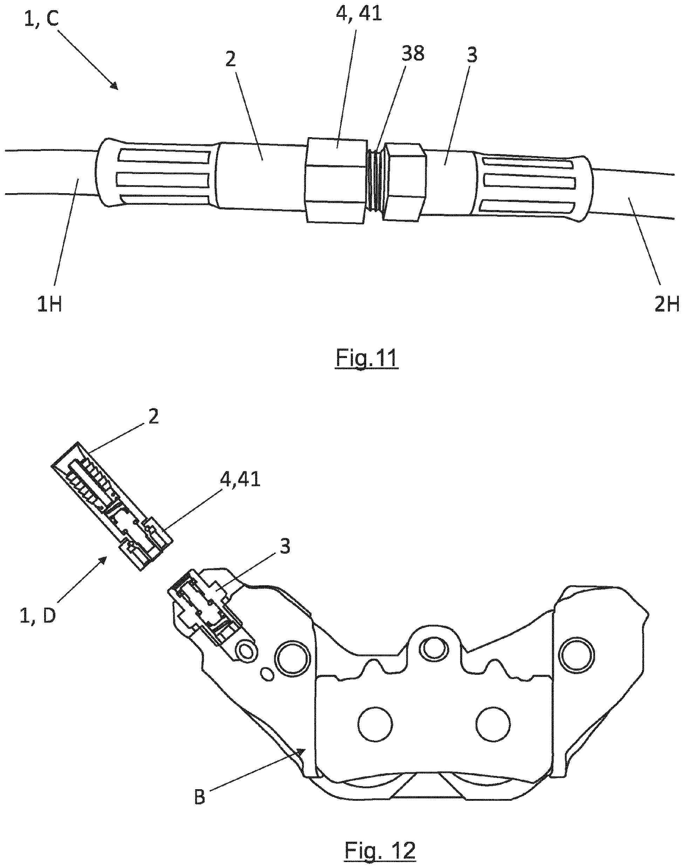

The first passage (21) extends from a first peripheral end (23) of the male connection element (2) to a first connection end (24) of the same, wherein the first peripheral end (23) comprises a first nipple (25) configured to directly received a first hose (1H), Figure 11.

The male connector element (2) comprises a first spring (26) disposed within the first passage (21), so that when it is compressed allows a fluid to flow through the first passage (21), and when it is decompressed pushes the first closing and opening means (22) to seal the male connection element (2).

The first closing and opening means (22) comprise a first valve (221) from which extends a first rod (222) integrally joined to said first valve (221). The first closing and opening means (22) are of "piston" type.

The first closing and opening means (22) comprise a first gasket (223) configured to work in collaboration with a first valve seat (27) disposed within the first passage (21) to hermetically seal said first passage (21) in the disconnected position (D), thus keeping the system bled. The first gasket (223) is made of a rubber O-ring.

Figure 6 shows a longitudinal section of the female connection element (3) in the disconnected position (D).

As can be seen, the second passage (31) extends from a second peripheral end (33) of the female connection element (3) to a second connection end (34) of the same, wherein the second peripheral end (33) comprises a second nipple (35) configured to directly received a second hose (2H), Figure 11.

The female connection element (3) comprises a second spring (36) disposed within the second passage (31), so that when it is compressed allows a fluid to flow through the second passage (31), and when it is decompressed pushes the second closing and opening means (32) to seal the female connection element (3).

The second closing and opening means (32) comprise a second valve (321) from which extends a second rod (322) integrally joined to said second valve (321). The second closing and opening means (22) are of "piston" type.

The second closing and opening means (32) comprise a second gasket (323) configured to work in collaboration with a second valve seat (37) disposed within the second passage (31) to hermetically seal said second passage (31) in the disconnected position (D), thus keeping the system bled. The second gasket (323) is made of a rubber O-ring.

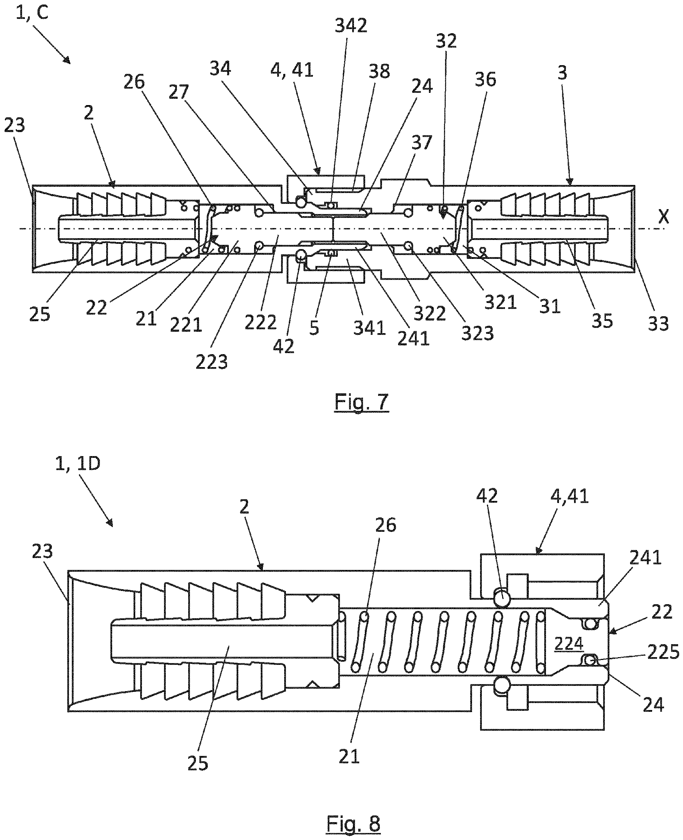

Figure 7 shows a longitudinal section of the connector (1) for quick assembly of hydraulic systems of the present invention in the connected position (C). As can be seen, the first rod (222) and the second rod (322) are configured to push each other in the connected position (C) to respectively compress the first spring (26) and the second spring (36) thus allowing a fluid to flow through both passages (21, 31).

The first spring (26) and the second spring (36) may have an equal elastic force to open both closing and opening means (22, 32) proportionally.

The male connection element (2) comprises an insertion part (241), whereas the female connection element (3) comprises a receiving part (341) configured to receive the insertion part (241), having an inner circular groove (342); wherein the inner circular groove (332) lodges an intermediate gasket (5). The intermediate gasket (5) is arranged to avoid leakage when the male connection element (2) is being inserted into the female connection end (3), and to ensure hermeticity once both connection elements (2, 3) are in the connected position (C).

The intermediate gasket (5) is arranged in a middle position between the first closing and opening means (22) and the second closing and opening means (32) in the connected position (C), or in a substantially equidistant position from said closing and opening means (22, 32). The intermediate gasket (5) is made of a rubber O-ring.

The thread (38) is externally disposed in the receiving part (341) to receive the threaded nut (41), so that said threaded nut (41) may embrace both the insertion part (241) and the receiving part (341) in the connected position (C) to further protect the connection from external elements.

Figures 8, 9 and 10 show a different embodiment of the closing and opening means of the connector (1) for quick assembly of hydraulic systems of the present invention.

As can be seen, the male connection element (2) comprises a first passage (21), and first closing and opening means (22) movable longitudinally along said first passage (21). In turn, the female connection element (3) comprises a second passage (31), and second closing and opening means (32) movable longitudinally along said second passage (31). The closing and opening means (22, 32) are configured to seal the connection elements (2, 3) in the disconnected position (D) of the connector (1).

The male connection element (2) is designed to be inserted into the female connection element (3) along an axial direction (X) to connect both connection elements (2, 3) in a connected position (C) of the connector (1).

The anchoring means (4) comprise a threaded nut (41) located on the male connection element (2), wherein said threaded nut (41) is freely rotatable around the axial direction (X) for being coupled to a thread (38) disposed on the female connection element (3) to securely anchor the male connection element (2) to the female connection element (3) in the connected position (C).

Figure 8 represents a longitudinal section of the male connection element (2) and the anchoring means (4) in the disconnected position (D) of the connector (1). As can be seen, the anchoring means (4) comprise a retention ring (42) arranged on the male connection element (2) to prevent the nut (41) from getting disassembled of the male connection element (2) in the disconnected position (D), while at the same time allowing the free rotation of the threaded nut (41) around the axial direction (X).

The first passage (21) extends from a first peripheral end (23) of the male connection element (2) to a first connection end (24) of the same, wherein the first peripheral end (23) comprises a first nipple (25) configured to directly received a first hose (1H), Figure 11.

The male connector element (2) comprises a first spring (26) disposed within the first passage (21), so that when it is compressed allows a fluid to flow through the first passage (21), and when it is decompressed pushes the first closing and opening means (22) to seal the male connection element (2).

The first closing and opening means (22) comprise a movable body (224), movable longitudinally along the first passage (21), surrounded by a third gasket (225) to hermetically seal said first passage (21) in the disconnected position (D), being disposed between the movable body (224) and an insertion part (241) of the male connection element (2) in said disconnected position (D). The third gasket (225) is made of a rubber O-ring.

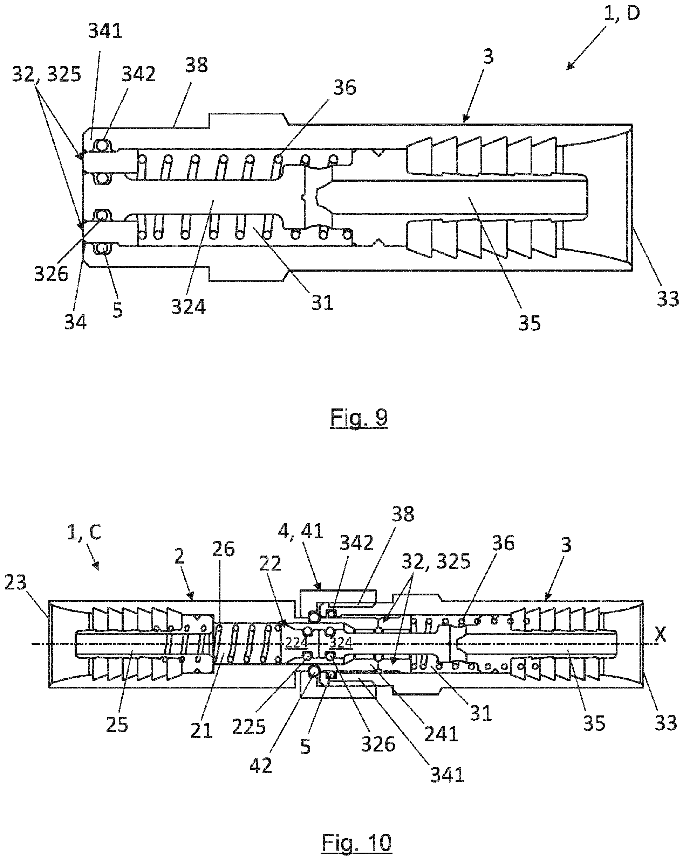

Figure 9 represents a longitudinal section of the female connection element (3) in the disconnected position (D) of the connector (1).

As can be seen, the second passage (31) extends from a second peripheral end (33) of the female connection element (3) to a second connection end (34) of the same, wherein the second peripheral end (33) comprises a second nipple (35) configured to directly received a second hose (2H), Figure 11.

The female connection element (3) comprises a second spring (36) disposed within the second passage (31), so that when it is compressed allows a fluid to flow through the second passage (31), and when it is decompressed pushes the second closing and opening means (32) to seal the female connection element (3).

The second closing and opening means (32) comprise:
- a fixed body (324) joined to the female connection element (3), facing the movable body (224) in the connected position (C) of the connector (1); and
- a movable sleeve (325) surrounding the fixed element (324), movable longitudinally along the second passage (31).

The fixed body (324) is surrounded by a fourth gasket (326) to avoid leakage between the fixed body (324) and the movable sleeve (325) in the disconnected position (D). The fourth gasket (326) is made of a rubber O-ring.

Figure 10 shows a longitudinal section of the connector (1) for quick assembly of hydraulic systems of the present invention in the connected position (C). As can be seen, the male connection element (2) and the female connection element (3) are anchored together thanks to the threaded nut (41). The closing and opening means (22, 32) are configured to allow a fluid to flow through the passages (21, 31) in the connected position (C).

The male connection element (2) comprises an insertion part (241), whereas the female connection element (3) comprises a receiving part (341) configured to receive the insertion part (241), having an inner circular groove (342); wherein the inner circular groove (332) lodges an intermediate gasket (5). The intermediate gasket (5) is arranged to avoid leakage when the male connection element (2) is being inserted into the female connection end (3), and to ensure hermeticity once both connection elements (2, 3) are in the connected position (C). The intermediate gasket (5) is disposed between the movable sleeve (325) and the receiving part (341) of the female connection element (3) in said disconnected position (D).

The intermediate gasket (5) is arranged between the insertion part (241) and the receiving part (341) in the connected position (C).

The thread (38) is externally disposed in the receiving part (341) to receive the threaded nut (41), so that said threaded nut (41) may embrace both the insertion part (241) and the receiving part (341) in the connected position (C) to further protect the connection from external elements.

The fixed body (324) is configured to push the movable body (224) in the connected position (C) to compress the first spring (26), whereas the insertion part (241) is configured to push the movable sleeve (325) in said connected position (C) to compress the second spring (36), thus allowing a fluid to flow through both passages (21, 31).

Figure 11 shows a first example of application of the connector of the present invention, wherein it is used to connect two hydraulic hoses (1H, 2H).

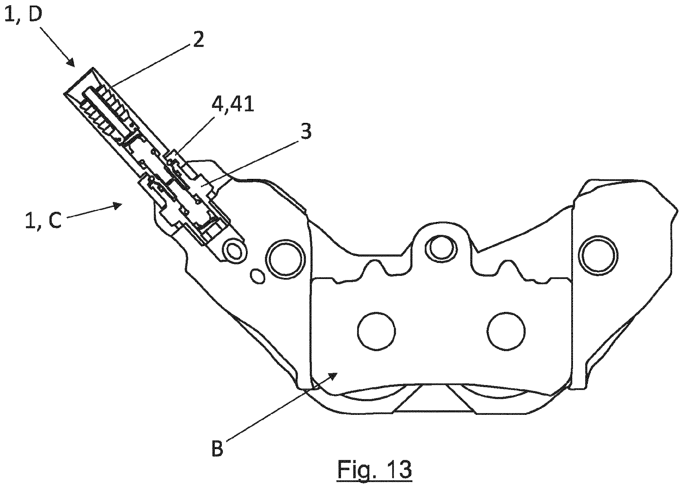

Figures 12 and 13 show a second example of application of the connector of the present invention, wherein it is used to connect a hydraulic hose to a brake caliper (B), showing the connector (1) in the disconnected position (D) and the connected position (C) respectively.

In this embodiment, the female connection element (3) is directly connected or assembled to the brake caliper (B) of the hydraulic system. So, this female connection element (3) does not receive a hydraulic hose. In this case, the second nipple (35) is not necessary, and the female connection element (3) is directly screwed to the brake caliper (B) by means of an external thread.

## Claims

1. A connector for quick assembly of hydraulic systems, comprising:
- a male connection element (2) comprising a first passage (21), and first closing and opening means (22) movable longitudinally along said first passage (21);
- a female connection element (3) comprising a second passage (31), and second closing and opening means (32) movable longitudinally along said second passage (31), wherein the male connection element (2) is designed to be inserted into the female connection element (3) along an axial direction (X) to connect both connection elements (2, 3) in a connected position (C) of the connector (1); and
- anchoring means (4) configured to anchor the male connection element (2) to the female connection element (3) in said connected position (C);
wherein the closing and opening means (22, 32) are configured to allow a fluid to flow through the passages (21, 31) in the connected position (C) and to seal the connection elements (2, 3) in a disconnected position (D) of the connector (1);
said connector (1) being **characterized in that** the anchoring means (4) comprise a threaded nut (41) located on the male connection element (2), wherein said threaded nut (41) is freely rotatable around the axial direction (X) for being coupled to a thread (38) disposed on the female connection element (3) to securely anchor the male connection element (2) to the female connection element (3) in the connected position (C).

2. A connector for quick assembly of hydraulic systems according to claim 1 **characterized in that** the anchoring means (4) comprise a retention ring (42) arranged on the male connection element (2) to prevent the nut (41) from getting disassembled of the male connection element (2) in the disconnected position (D).

3. A connector for quick assembly of hydraulic systems according to any of claims 1 to 2 **characterized in that** the first passage (21) extends from a first peripheral end (23) of the male connection element (2) to a first connection end (24) of the same, wherein the first peripheral end (23) comprises a first nipple (25) configured to directly received a first hose (1H).

4. A connector for quick assembly of hydraulic systems according to any of claims 1 to 3 **characterized in that** the male connection element (2) comprises a first spring (26) disposed within the first passage (21), so that when it is compressed allows a fluid to flow through the first passage (21), and when it is decompressed pushes the first closing and opening means (22) to seal the male connection element (2).

5. A connector for quick assembly of hydraulic systems according to any of claims 1 to 4 **characterized in that** the second passage (31) extends from a second peripheral end (33) of the female connection element (3) to a second connection end (34) of the same, wherein the second peripheral end (33) comprises a second nipple (35) configured to directly received a second hose (2H).

6. A connector for quick assembly of hydraulic systems according to any of claims 1 to 5 **characterized in that** the female connection element (3) comprises a second spring (36) disposed within the second passage (31), so that when it is compressed allows a fluid to flow through the second passage (31), and when it is decompressed pushes the second closing and opening means (32) to seal the female connection element (3).

7. A connector for quick assembly of hydraulic systems according to claims 4 and 6 **characterized in that** the first closing and opening means (22) and the second closing and opening means (32) are configured to push each other in the connected position (C) to respectively compress the first spring (26) and the second spring (36) thus allowing a fluid to flow through both passages (21, 31).

8. A connector for quick assembly of hydraulic systems according to claim 7 **characterized in that** the first spring (26) and the second spring (36) have an equal elastic force.

9. A connector for quick assembly of hydraulic systems according to any of claims 1 to 8 **characterized in that** the male connection element (2) comprises an insertion part (241); **and in that** the female connection element (3) comprises a receiving part (341) configured to receive the insertion part (241), having an inner circular groove (342); wherein the inner circular groove (342) lodges an intermediate gasket (5) arranged to avoid leakage when the male connection element (2) is being inserted into the female connection end (3), and to ensure hermeticity once both connection elements (2, 3) are in the connected position (C).

10. A connector for quick assembly of hydraulic systems according to claim 9 **characterized in that** the thread (38) is externally disposed in the receiving part (341).

11. A connector for quick assembly of hydraulic systems according to any of claims 9 to 10 **characterized in that** the threaded nut (41) embraces both the insertion part (241) and the receiving part (341) in the connected position (C).

12. A connector for quick assembly of hydraulic systems according to any of claims 1 to 11 **characterized in that** the first closing and opening means (22) comprise a first valve (221) from which extends a first rod (222) integrally joined to said first valve (221).

13. A connector for quick assembly of hydraulic systems according to claim 12 **characterized in that** the first closing and opening means (22) comprise a first gasket (223) configured to work in collaboration with a first valve seat (27) disposed within the first passage (21) to hermetically seal said first passage (21) in the disconnected position (D).

14. A connector for quick assembly of hydraulic systems according to any of claims 12 to 13 **characterized in that** the second closing and opening means (32) comprise a second valve (321) from which extends a second rod (322) integrally joined to said second valve (321).

15. A connector for quick assembly of hydraulic systems according to claim 14 **characterized in that** the second closing and opening means (32) comprise a second gasket (323) configured to work in collaboration with a second valve seat (37) disposed within the second passage (31) to hermetically seal said second passage (31) in the disconnected position (D).

16. A connector for quick assembly of hydraulic systems according to any of claims 1 to 11 **characterized in that** the first closing and opening means (22) comprise a movable body (224), movable longitudinally along the first passage (21), surrounded by a third gasket (225) to hermetically seal said first passage (21) in the disconnected position (D).

17. A connector for quick assembly of hydraulic systems according to claim 16 **characterized in that** the second closing and opening means (32) comprise:
- a fixed body (324) joined to the female connection element (3), facing the movable body (224) in the connected position (C); and
- a movable sleeve (325) surrounding the fixed element (324), movable longitudinally along the second passage (31).

18. A connector for quick assembly of hydraulic systems according to claim 17 **characterized in that** the fixed body (324) is surrounded by a fourth gasket (326) to avoid leakage between the fixed body (324) and the movable sleeve (325) in the disconnected position (D).
